# EUROPÄISCHE PATENTSCHRIFT

(11) **EP 2 280 850 B1**
(45) Veröffentlichungstag und Bekanntmachung des Hinweises auf die Patenterteilung: **28.01.2015**
(21) Anmeldenummer: 09749886.9
(22) Anmeldetag: 20.05.2009
(51) Int. Cl.: B60S 1/34

(54) **WISCHERARM FÜR EINE SCHEIBENWISCHANLAGE, SCHEIBENWISCHANLAGE SOWIE VERFAHREN ZUR MONTAGE EINER SCHEIBENWISCHANLAGE**
WIPER ARM FOR A WINDSCREEN WIPER DEVICE, A WINDSCREEN WIPER DEVICE AND METHOD FOR ASSEMBLING A WINDSCREEN WIPER DEVICE
BRAS D'ESSUIE-GLACE POUR UN DISPOSITIF D'ESSUIE-GLACE, UN DISPOSITIF D'ESSUIE-GLACE ET PROCEDE POUR LE MONTAGE D'UN DISPOSITIF D'ESSUIE-GLACE

(30) Priorität: 21.05.2008 DE 102008001938
(43) Veröffentlichungstag der Anmeldung: 09.02.2011
(73) Patentinhaber: Robert Bosch GmbH, 70442 Stuttgart (DE)
(72) Erfinder: WOLFGARTEN, Sven, 77815 Buehl (DE); MOSER, Frank, 76456 Kuppenheim (DE); RAPP, Harald, 77815 Buehl (DE); BURKARD, Hermann, 76473 Iffezheim (DE)
(86) Internationale Anmeldenummer: PCT/EP2009/056174
(87) Internationale Veröffentlichungsnummer: WO 2009/141396

(56) Entgegenhaltungen:
- DE-A1- 10 146 721
- DE-A1-102004 063 175
- GB-A- 2 026 085
- US-A- 5 634 234

## Beschreibung

### Stand der Technik

Die Erfindung betrifft einen Wischerarm für eine Scheibenwischanlage gemäß dem Oberbegriff des Anspruchs 1, eine Scheibenwischanlage gemäß Anspruch 10 sowie ein Montageverfahren gemäß Anspruch 12.

Bekannt sind Scheibenwischanlagen mit einem einzigen Wischerarm (Einhebelsystem-Scheibenwischanlagen). Um mit einem einzigen Wischerarm einen vom Gesetzgeber vorgegebenen Wischbereich auf der Frontscheibe überstreichen zu können, weist der Wischerarm einer derartigen Einhebelsystem-Scheibenwischanlage neben einer Wischerstange eine Steuerstange auf, die mit der Wischerstange eine gekoppelte Bewegung vollführt und das eigentliche Wischerblatt bei der Schwenkbewegung des Wischerarms relativ zu der Wischerstange auslenkt. Bei dem bekannten Wischerarm ist die Steuerstange einenends gelenkig mit einem Wischergestängeträger verbunden. Hierzu ist die Steuerstange endseitig mit einem Kunststoffabschnitt umspritzt, in dem eine Kugelschale eines Kugelgelenks ausgebildet ist. Diese Kugelschale wirkt im montierten Zustand mit einem Kugelkopf des Kugelgelenks zusammen, der an dem Träger des Wischergestänges festgelegt und damit karosseriefest ist. Zur Montage des Wischerarms, genauer der Steuerstange, wird letztere mit ihrer in dem unmittelbar an der Steuerstange festgelegten Kunststoffab-Zur Montage des Wischerarms, genauer der Steuerstange, wird letztere mit ihrer in dem unmittelbar an der Steuerstange festgelegten Kunststoffabschnitt ausgebildeten Kugelschale auf den karosseriefesten Kugelkopf aufgeklipst.

Die US5634234A offenbart eine Scheibenwischeranlage für einen Rückspiegel, wobei der Wischerarm und die Steuerstange an einem gemeinsamen Gelenk angebracht sind, das an einem Träger angerordnet ist.

Nachteilig bei der bekannten Konstruktion ist zum einen, dass es durch im Betrieb wirkende Kräfte zu einem Ablösen der Steuerstange von dem Kugelkopf kommen kann. Darüber hinaus ist nachteilig, dass aufgrund der unterschiedlichen Materialbeschaffenheit des die Kugelschale aufweisenden Kunststoffabschnitts und der Stahl-Steuerstange ein zweischrittiger Lackierprozess zum Lackieren der Steuerstange und des Kunststoffabschnitts realisiert werden muss.

### Offenbarung der Erfindung

### Technische Aufgabe

Der Erfindung liegt der Gedanke zugrunde, einen Wischerarm mit einem verbesserten Befestigungskonzept zum Fixieren der Steuerstange an einem karosseriefesten Gelenkkopf vorzuschlagen. Ferner besteht die Aufgabe darin, eine entsprechend optimierte Scheibenwischanlage sowie ein geeignetes Montageverfahren für eine derartige Scheibenwischanlage vorzuschlagen.

### Technische Lösung

Diese Aufgabe wird hinsichtlich des Wischerarms mit den Merkmalen des Anspruchs 1, hinsichtlich der Scheibenwischanlage mit den Merkmalen des Anspruchs 10 und hinsichtlich des Montageverfahrens mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.
fenbarten Merkmalen. Zur Vermeidung von Wiederholungen sollen verfahrensgemäß offenbarte Merkmale auch als vorrichtungsgemäß offenbart gelten und beanspruchbar sein. Ebenso sollen vorrichtungsgemäß offenbarte Merkmale als verfahrensgemäß offenbart gelten und beanspruchbar sein.

Der Erfindung liegt der Gedanke zugrunde, die zum Zusammenwirken mit einem karosseriefesten Gelenkkopf ausgebildete Gelenkschale nicht unmittelbar an der Steuerstange festzulegen, sondern die Gelenkschale an einem Gelenkschalenbauteil anzuordnen bzw. auszubilden, welches nicht unmittelbar sondern über ein von dem Gelenkschalenbauteil separates Befestigungsbauteil an der Steuerstange festlegbar ist. Dabei kann die Kombination aus Befestigungsbauteil und Gelenkschalenbauteil derart ausgebildet sein, dass das Gelenkschalenbauteil lösbar an dem Befestigungsbauteil festlegbar ist, oder aber derart, dass ein einmal am Befestigungsbauteil festgelegtes Gelenkschalenbauteil dauerhaft mit dem Befestigungsbauteil verbunden bleibt. Das neuartige Verbindungskonzept ermöglicht es, bei Bedarf, das Befestigungsbauteil und die Steuerstange aus einem ähnlichen oder gleichen Material auszubilden, derart dass das Befestigungsbauteil zusammen mit der Steuerstange in einem gemeinsamen Standard-Lackierprozess lackierbar ist. Beispielsweise können das Befestigungsbauteil und die Steuerstange aus Metall, vorzugsweise aus dem gleichen Metall, insbesondere aus Stahlblech ausgebildet sein, um neben dem Lackieren auch die Montage zu erleichtern. Auch ermöglicht es ein nach dem Konzept der Erfindung ausgebildeter Wischerarm, bei Bedarf, das Befestigungsbauteil derart auszubilden, dass es das Gelenkschalenbauteil gegen ein unbeabsichtigtes Ablösen von dem karosseriefesten Gelenkkopf sichert. An dieser Stelle sei ausdrücklich darauf hingewiesen, dass die gleiche oder ähnliche Materialwahl von Befestigungsbauteil und Steuerstange sowie die das Gelenkschalenbauteil sichernde Ausführung des Befestigungsbauteils lediglich mögliche, nicht zwingend weitere Ausgestaltungsoptionen des Wischerarms sind. Die mit einem nach dem Konzept der Erfindung ausgebildeten Wischerarm erzielbaren Vorteile überwiegen für die meisten Anwendungszwecke den Nachteil, im Vergleich zum Stand der Technik, ein zusätzliches Bauteil (separates Befestigungsbauteil) vorsehen zu müssen.

Von besonderem Vorteil ist eine Ausführungsform des Wischerarms, bei der das Gelenkschalenbauteil derart ausgebildet ist, dass es mit dem Gelenkkopf verrastbar bzw. auf diesen aufklipsbar ist. Hierzu ist es bevorzugt, wenn das Gelenkschalenbauteil, zumindest abschnittsweise im Bereich einer Einführöffnung zur Aufnahme des Gelenkkopfes elastisch ausgebildet ist, um den Gelenkkopf bei der Montage aufnehmen und dazu abschnittsweise umschließen zu können.

Um eine besonders robuste Verbindung zwischen dem Gelenkschalenbauteil und dem Befestigungsbauteil zu garantieren, ist eine Ausführungsform bevorzugt, bei der das Gelenkschalenbauteil formschlüssig mit dem Befestigungsbauteil verbindbar, bzw. in montiertem Zustand verbunden ist.

Eine formschlüssige Verbindung zwischen dem Gelenkschalenbauteil und dem Befestigungsbauteil kann beispielsweise dadurch realisiert werden, dass das Befestigungsbauteil das Gelenkschalenbauteil im montierten Zustand hintergreift, vorzugsweise auf einer im montierten Zustand dem Gelenkkopf zugewandten Seite.

In Weiterbildung der Erfindung ist mit Vorteil vorgesehen, dass, wie eingangs bereits erwähnt, das Befestigungsbauteil derart mit dem Gelenkschalenbauteil zusammenwirkt, dass das Gelenkschalenbauteil gegen ein unbeabsichtigtes Abziehen entgegen der Montagerichtung von dem Gelenkkopf gesichert ist. Von besonderem Vorteil ist dabei eine Ausführungsform des Wischerarms, bei der das Befestigungsbauteil derart mit dem Gelenkschalenbauteil zusammenwirkt, insbesondere indem das Befestigungsbauteil des Gelenkschalenbauteils zumindest abschnittsweise umschließt, dass das, insbesondere starre, vorzugsweise aus Stahlblech bestehende, Befestigungsbauteil ein Aufweiten des Gelenkschalenbauteils verhindert, welches jedoch notwendig wäre, um die Einführöffnung im Gelenkschalenbauteil kurzzeitig aufzuweiten um ein Herausgleiten des Gelenkkopfes zu ermöglichen. Zusätzlich oder alternativ ist es realisierbar, dass das Befestigungsbauteil, vorzugsweise durch Umgreifen des Gelenkschalenbauteils, die Einführöffnung im Gelenkschalenbauteil, die zum Einführen des Gelenkkopfes bei der Montage ausgebildet ist, teilweise verschließt. Durch das teilweise Verschließen dieser Einführöffnung ist es dann nicht mehr möglich, das Gelenkschalenbauteil entgegen der Montagerichtung (Steckrichtung/Aufklipsrichtung) von dem karosseriefesten Gelenkkopf abzuziehen.

Von besonderem Vorteil ist eine Ausführungsform des Wischerarms, bei der das Gelenkschalenbauteil zum Festlegen am Befestigungsbauteil in eine Aufnahme (vorzugsweise randseitig offene Aussparung) des Befestigungsbauteils einschiebbar ist, vorzugsweise senkrecht zu einer Montagerichtung zur Montage des Gelenkschalenbauteil auf dem Gelenkkopf. Bevorzugt wird bei der Montage derart vorgegangen, dass zunächst das Gelenkschalenbauteil auf den Gelenkkopf aufgeschoben, vorzugsweise geklipst wird. Daraufhin wird dann das Befestigungsbauteil am Gelenkschalenbauteil, vorzugsweise durch Aufschieben, insbesondere formschlüssig, befestigt. Besonders bevorzugt ist es dabei, wenn das Gelenkschalenbauteil nach dem Einschieben von dem Befestigungsbauteil hintergriffen und vorzugsweise dadurch gegen ein unbeabsichtigtes Abziehen von dem Gelenkkopf gesichert ist.

In Weiterbildung der Erfindung ist mit Vorteil vorgesehen, dass sowohl das Befestigungsbauteil als auch die Steuerstange aus Metall, vorzugsweise aus Stahl, ausgebildet sind. Hierdurch kann zum einen ein Kunststoffspritzen des Befestigungsbauteils unterbleiben. Zum anderen ist das Festlegen des Befestigungsbauteils an der Steuerstange erleichtert, insbesondere dann, wenn das Befestigungsbauteil durch Verkrimpen an der Steuerstange festgelegt wird. Hierbei wird das Befestigungsbauteil zunächst über einem endseitigen Steuerstangenabschnitt geschoben und dann von außen mit einer nach radial innen wirkenden Verkrimpkraft belegt.

Von besonderem Vorteil ist eine Ausführungsform des Wischerarms, bei der die Steuerstange und das Befestigungsbauteil in einem gemeinsamen Lackierschritt lackiert werden/wurden. Vorzugsweise wird dabei das an der Steuerstange, insbesondere durch Verkrimpen, festgelegte Befestigungsbauteil zusammen mit der Steuerstange in ein kathodisches Lacktauchbad eingeführt.

Eine besonders reibungsarme Verbindung des Steuerarms mit einem karosseriefesten Bauteil wird dadurch gewährleistet, dass die Gelenkschale des Gelenkschalenbauteils als (Teil-)Kugelschale und der Gelenkkopf als (Teil-)Kugelkopf ausgebildet sind, sodass die Gelenkschale und der Gelenkkopf zusammen ein Kugel-Schalen-Gelenk bilden.

Die Erfindung führt auch auf eine Scheibenwischanlage. Diese zeichnet sich durch einen zuvor beschriebenen Wischerarm aus. Bevorzugt handelt es sich bei dem Wischerarm um den einzigen Wischerarm der Scheibenwischanlage, wobei es noch weiter bevorzugt ist, die Scheibenwischanlage als Frontscheibenwischanlage auszubilden.

Im montierten Zustand der Scheibenwischanlage ist das den Gelenkkopf aufnehmende Gelenkschalenbauteil am Befestigungsbauteil festgelegt, welches wiederum, insbesondere durch Verkrimpen mit der Steuerstange verbunden ist.

Die Erfindung führt darüber hinaus auf ein Montageverfahren zur Montage einer Scheibenwischanlage. Das Verfahren ist gekennzeichnet durch zumindest die beiden Schritte:
- Festlegen eines, insbesondere karosseriefesten, Gelenkkopfes der Scheibenwischanlage an einem Gelenkschalenbauteil, und daraufhin
- Festlegen des Gelenkschalenbauteils an einem Befestigungsbauteil, das in einem vorhergehenden Schritt mit der Steuerstange, vorzugsweise durch Verkrimpen, verbunden wurde.

Vorzugsweise erfolgt das Festlegen des Gelenkschalenbauteils an dem Befestigungsbauteil durch Einschieben des Gelenkschalenbauteils in eine Aufnahme des Befestigungsbauteils, wobei hierbei bevorzugt nicht das Gelenkschalenbauteil, sondern lediglich das Befestigungsbauteil aktiv bewegt wird.

Besonders bevorzugt erfolgt das Befestigen des Gelenkschalenbauteils an dem Befestigungsbauteil derart, dass das Gelenkschalenbauteil nach dem Festlegen gegen ein unbeabsichtigtes Abziehen von dem Gelenkkopf gesichert wird.

Mit Vorteil ist in Weiterbildung der Erfindung vorgesehen, dass die Steuerstange und das Befestigungsbauteil zu einem Zeitpunkt vor dem Festlegen des Gelenkschalenbauteils an dem Befestigungsbauteil in einem gemeinsamen Lackierschritt, vorzugsweise in einem Lack-Kathodentauchbad, lackiert werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine perspektivische Ansicht eines Wischerarms für eine Einhebelsystem-Scheibenwischanlage,
- Fig. 2: ein vergrößertes, in Fig. 1 nicht sichtbares, Detail des Wischerarms, das ein Befestigungsbauteil zeigt, welches ein Gelenkschalenbauteil mit darin aufgenommenem Gelenkkopf trägt, wobei das Befestigungsbauteil an der in Fig. 1 gezeigten Steuerstange durch Verkrimpen festlegbar ist,
- Fig. 3: eine Seitenansicht der Verbindung aus Steuerstange, Befestigungsbauteil, Gelenkschalenbauteil und Gelenkkopf und
- Fig. 4: eine Schnittansicht entlang der Schnittlinie A-A gemäß Fig. 3.

### Ausführungsformen der Erfindung

In den Figuren sind gleiche Bauteile und Bauteile mit der gleichen Funktion mit den gleichen Bezugszeichen gekennzeichnet.

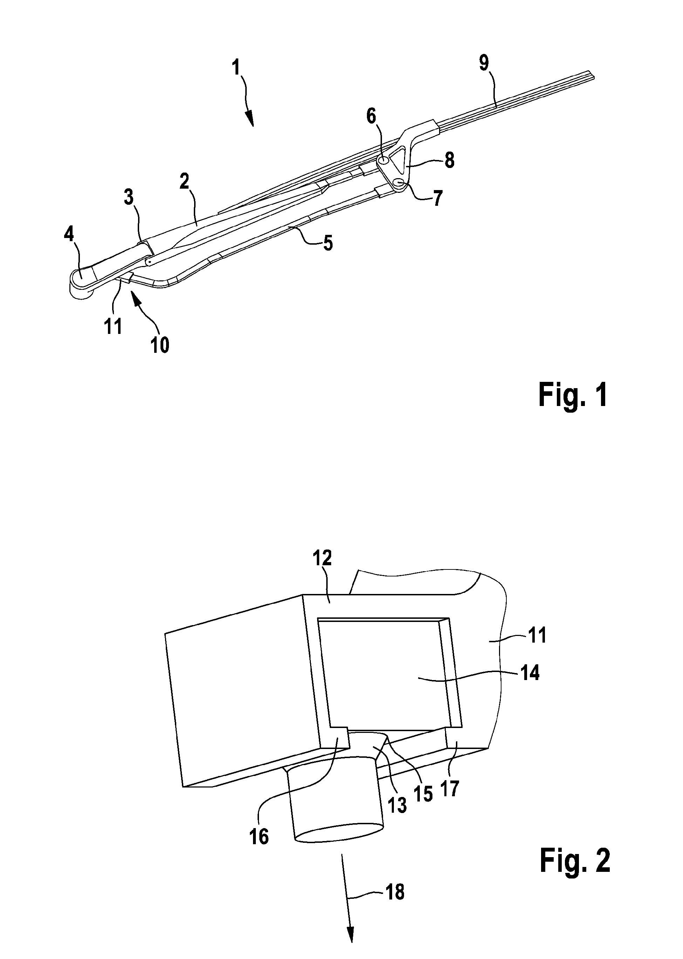

In Fig. 1 ist ein Wischerarm 1 für eine ansonsten bekannte Scheibenwischanlage gezeigt. Der Wischerarm 1 umfasst eine Wischerstange 2, die mittels eines Schwenkgelenks 3 an einem Fixierbauteil 4 festgelegt ist. Dabei erstreckt sich eine Schwenkachse des Schwenkgelenks 3 quer zur Längserstreckung des Wischerarms 1. Die Wischerstange 2 besteht aus einem in der Zeichnungsebene linken Gelenkteil 22 und einem mit diesem verkrimpten Stangenteil 23.

Mit Hilfe des Fixierbauteils 4 kann der Wischerarm 1 an einer nicht gezeigten Wischerwelle der Scheibenwischanlage drehfest festgelegt werden, sodass ein Verschwenken der Wischerwelle zu einem Verschwenken des Wischerarms 1 auf der Kraftfahrzeugscheibe führt. Die Wischerwelle selbst wiederum kann beispielsweise über ein Kurbelgestänge angetrieben werden, dem wiederum ein elektrischer Antriebsmotor zugeordnet ist. Ferner ist eine Ausführungsform der Scheibenwischanlage realisierbar, bei der auf ein derartiges Gestänge verzichtet wird und der Wischerarm 1 entweder unmittelbar von einem Antriebsmotor oder von einem zwischen dem Antriebsmotor und dem Wischerarm 1 angeordneten Umsetzergetriebe pendelnd angetrieben ist.

Der Wischerarm 1 umfasst neben der Wischerstange 2 eine Steuerstange 5 aus Stahl. Die Steuerstange 5 erstreckt sich über den größten Teil ihrer Längserstreckung näherungsweise parallel zur Wischerstange 2. Sowohl die Steuerstange 5 als auch die Wischerstange 2 sind auf ihren von dem Fixierbauteil 4 abgewandten Enden über jeweils ein Gelenk 6, 7 mit einem Halteelement 8 des Wischerarms 1 gelenkig verbunden, wobei das Halteelement 8 ein Wischerblatt 9 trägt. Die Gelenke 6, 7 sind mit Abstand zueinander angeordnet, wobei das Halteelement 8 die Verstellbewegung der Wischerstange 2 und der Steuerstange 5 koppelt - derart, dass eine Verschwenkbewegung der Wischerstange 2 zu einer gekoppelten, definierten Schwenkbewegung der Steuerstange 5 führt, die wiederum eine Relativbewegung des Halteelementes 8 und damit des Wischerblattes 9 relativ zur Wischerstange 2 verursacht, um Abschnitte der Kraftfahrzeugscheibe überstreichen zu können, die ansonsten ausgelassen würden.

Wie sich weiterhin aus Fig. 1 ergibt, ist an dem von dem Halteelement 8 wegweisenden Ende 10 ein ebenfalls aus Stahlblech ausgebildetes Befestigungsbauteil 11 durch Verkrimpen festgelegt, wobei das Befestigungsbauteil 11 ausschnittsweise vergrößert in Fig. 2 dargestellt ist. Das Befestigungsbauteil 11 in der Darstellung gemäß Fig. 1 wird größtenteils von dem Fixierbauteil 4 verdeckt.

Das durch Verkrimpen an der Steuerstange 5 festgelegte Befestigungsbauteil 11 weist eine nutartige Aufnahme 12 auf, die auf der einem als Kugelkopf ausgebildeten Gelenkkopf 13 zugewandten Seite offen ist. Das Befestigungsbauteil 11 ist mit seiner Aufnahme 12 über ein als Kugelgelenkschalenbauteil ausgebildetes Gelenkschalenbauteil 14 aus Kunststoff geschoben, welches auf seiner dem karosseriefesten Gelenkkopf 13 zugewandten Seite eine Einführöffnung 15 zur Montage des Gelenkschalenbauteils 14 auf dem Gelenkkopf 13 dient. Die Steuerstange 5 und das Befestigungsbauteil 11 wurden vor der Montage des Gelenkschalenbauteils 14 mit darin aufgenommenem Gelenkkopf 13 in einem gemeinsamen Lackierschritt lackiert.

Wie sich weiterhin aus Fig. 2 ergibt, hintergreifen zwei parallel zueinander verlaufende Schultern 16, 17 des Befestigungsbauteils 11 das Gelenkschalenbauteil 14 auf der der nicht gezeigten Fahrzeugkarosserie zugewandten Seite. Dabei verhindern die Schultern 16, 17, dass das Gelenkschalenbauteil 14 entgegen der Einklipsrichtung 18, in der das Gelenkschalenbauteil 14 bei der Montage auf den Gelenkkopf 13 aufgeschoben wurde, von dem Gelenkschalenkopf 13 abgezogen wird. Die Sicherung gegen ein unbeabsichtigtes Abziehen des Gelenkschalenbauteils 14 von dem Gelenkkopf 13 ist dabei im Wesentlichen darauf zurückzuführen, dass das starre Befestigungsbauteil 11 ein zum Abziehen des Gelenkschalenbauteils 14 vom Gelenkkopf 13 notwendiges Aufweiten des Gelenkschalenbauteils 14 zur Vergrößerung der Einführöffnung 15 sicher verhindert. Der Abstand zwischen den einander gegenüberliegenden Schultern 16, 17 ist geringer gewählt als der maximale Durchmesser des Gelenkkopfes 13. Erst nach Abschieben des Befestigungsbauteils 11 von dem Gelenkschalenbauteil, also in einer demontierten Stellung, kann das Gelenkschalenbauteil 14 entgegen der Einklipsrichtung 18 von dem Gelenkkopf 13 abgezogen werden.

Wie sich weiter aus Fig. 2 ergibt, ist die Querschnittskontur der Aufnahme 12 rechteckig, wobei das Gelenkschalenbauteil 14 formkongruent zur Innenkontur der Aufnahme 12 ausgebildet ist.

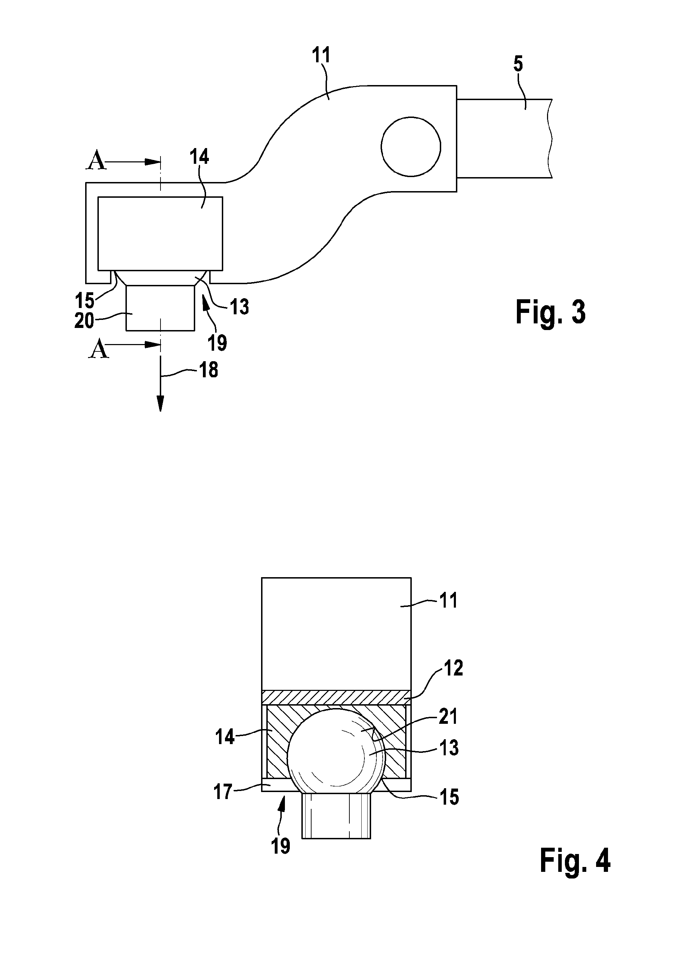

In Fig. 3 ist eine Seitenansicht der Anordnung, umfassend die Steuerstange 5, das durch Verkrimpen an dieser festgelegte Befestigungsbauteil 11 und das von dem Befestigungsbauteil 11 formschlüssig gehaltene Gelenkschalenbauteil 14, in dessen Einführöffnung 15 wiederum der karosseriefeste Gelenkkopf 13 gehalten ist, gezeigt. Wie sich aus Fig. 3 ergibt, ist die Montagerichtung zum Aufschieben des Befestigungsbauteils 11 auf das Gelenkbauteil 14 rechtwinklig zur Einklipsrichtung 18 (Montagerichtung) orientiert, in der zuvor das Gelenkschalenbauteil 14 auf den Gelenkkopf 13 aufgeschoben werden muss.

Wie sich weiterhin aus Fig. 3 ergibt, ist der Abstand der das Gelenkschalenbauteil 14 hintergreifenden Schultern 16, 17 geringer als die Breite des Gelenkschalenbauteils 14 und auch geringer als die Breite der Aufnahme 12. Die Schultern 16, 17 begrenzen einen Zugang 19 zur Aufnahme 12, durch die ein einstückig mit dem Gelenkkopf 13 ausgebildeter Befestigungsbolzen 20 in Richtung der Einklipsrichtung 18 herausgeführt ist, wobei die Breite des Zugangs 19 geringer ist als der Durchmesser des Gelenkkopfes 13. Mittels des Befestigungsbolzens 20 ist der Gelenkkopf 13 an einem karosseriefesten Bauteil, vorzugsweise an einem Gestängeträger oder einem Getriebegehäuse der Scheibenwischanlage festgelegt.

In Fig. 4 ist eine Schnittansicht der Darstellung gemäß Fig. 3 gezeigt. Zu erkennen ist der Gelenkkopf 13 der endseitig kugelförmig konturiert ist. Der Gelenkkopf 13 ist in einer innerhalb des Gelenkschalenbauteils 14 ausgebildeten, kugelförmigen Gelenkschale 21 aufgenommen, derart, dass das Gelenkschalenbauteil 14 zusammen mit dem Befestigungsbauteil 11 und der Steuerstange 5 relativ zu dem karosseriefesten Gelenkkopf 13 verschwenkbar sind. Zu erkennen ist ferner eine den Zugang 19 begrenzende Schulter 17, die das Gelenkschalenbauteil 14 auf der der Fahrzeugkarosserie zugewandten Seite hintergreift. Ferner ist das Befestigungsbauteil 11 mit seiner Aufnahme 12 zum seitlichen Einschieben des Gelenkschalenbauteils 14 zu erkennen, wobei das Befestigungsbauteil 11 das Gelenkschalenbauteil 14 an drei rechtwinklig zueinander angeordneten Seiten vollständig und an einer vierten, unteren Seite teilweise - dort mit Hilfe der Schultern 16, 17 - umgreift und somit formschlüssig hält.

## Patentansprüche

1. **Wischerarm für eine Scheibenwischanlage, insbesondere für ein Kraftfahrzeug, mit einer Wischerstange (2) und einer relativ zur Wischerstange (2) bewegbaren, mit der Wischerstange (2) gekoppelten Steuerstange (5),** wobei die Steuerstange (5) mittels einer Gelenkschale (21) an einem karosseriefesten Gelenkkopf (13) einer Scheibenwischanlage festlegbar ist,
**dadurch gekennzeichnet,**
**dass** die Gelenkschale (21) als ein von einem an der Steuerstange (5) festgelegten Befestigungsbauteil (11) separates, an dem Befestigungsbauteil (11) festlegbares Gelenkschalenbauteil (14) ausgebildet ist.

2. Wischerarm nach Anspruch 1,
**dadurch gekennzeichnet,**
**dass** das Gelenkschalenbauteil (14) formschlüssig mit den Befestigungsbauteil (11) verbindbar ist.

3. Wischerarm nach einem der Ansprüche 1 oder 2,
**dadurch gekennzeichnet,**
**dass** das Befestigungsbauteil (11) das am Befestigungsbauteil (11) festgelegte Gelenkschalenbauteil (14) hintergreift.

4. Wischerarm nach einem der vorhergehenden Ansprüche,
**dadurch gekennzeichnet,**
**dass** das Befestigungsbauteil (11) das Gelenkschalenbauteil (14) gegen Abziehen von dem Gelenkkopf (13) sichernd ausgebildet ist, vorzugsweise dadurch, dass das Befestigungsbauteil (11) eine, zum Einführen des Gelenkkopfes (13) in das Gelenkschalenbauteil (14) ausgebildete Einführöffnung (15) des Gelenkschalenbauteils (14) verschließt und/oder dadurch, dass das, insbesondere starre, Befestigungsbauteil (11) ein Aufweiten des, vorzugsweise zumindest abschnittsweise elastischen, Gelenkschalenbauteils (14) zum temporären Vergrößern der Einführöffnung (15) des Gelenkschalenbauteils (14) verhindert.

5. Wischerarm nach einem der vorhergehenden Ansprüche,
**dadurch gekennzeichnet,**
**dass** das Gelenkschalenbauteil (14) zum Festlegen am Befestigungsbauteil (11), durch vorzugsweise seitliches Aufschieben des Befestigungsbauteils (11) auf das Gelenkschalenbauteil (14) in eine Aufnahme (12) des Befestigungsbauteils (11) einführbar ist.

6. Wischerarm nach einem der vorhergehenden Ansprüche,
**dadurch gekennzeichnet,**
**dass** das Befestigungsbauteil (11) aus Metall, vorzugsweise aus Stahl, ausgebildet ist.

7. Wischerarm nach einem der vorhergehenden Ansprüche,
**dadurch gekennzeichnet,**
**dass** das Befestigungsbauteil (11) durch Verkrimpen an der, vorzugsweise aus Metall, insbesondere aus Stahl, ausgebildeten Steuerstange (5) festgelegt ist.

8. Wischerarm nach einem der vorhergehenden Ansprüche,
**dadurch gekennzeichnet,**
**dass** die Steuerstange (5) und das Befestigungsbauteil (11) in einem gemeinsamen Lackierschritt, vorzugsweise durch Eintauchen in ein kathodisches Lacktauchbad, lackiert sind.

9. Wischerarm nach einem der vorhergehenden Ansprüche,
**dadurch gekennzeichnet,**
**dass** die Gelenkschale (21) als Kugelschale und der Gelenkkopf (13) als Kugelkopf ausgebildet sind.

10. Scheibenwischanlage mit, vorzugsweise ausschließlich, einem Wischerarm (1) nach einem der vorhergehenden Ansprüche.

11. Scheibenwischanlage nach Anspruch 10,
**dadurch gekennzeichnet,**
**dass** in dem am Befestigungsbauteil (11) festgelegten Gelenkschalenbauteil (14) der, vorzugsweise an einer Gestängehalterung angeordnete, karosseriefeste Gelenkkopf (13) der Scheibenwischanlage aufgenommen ist.

12. Verfahren zur Montage einer Scheibenwischanlage, nach einem der Ansprüche 10 oder 11, **gekennzeichnet durch** die Schritte:
▪ Festlegen eines karosseriefesten Gelenkkopfes (13) der Scheibenwischanlage an einem Gelenkschalenbauteil (14), und danach
• Festlegen des Gelenkschalenbauteils (14) an einem zuvor an einer Steuerstange (5), vorzugsweise durch Verkrimpen, festgelegten Befestigungsbauteils (11).

13. Verfahren nach Anspruch 12,
**dadurch gekennzeichnet,**
**dass** das Gelenkschalenbauteil (14) derart an dem Befestigungsbauteil (11) festgelegt wird, dass das Gelenkschalenbauteil (14) gegen Abziehen von dem Gelenkkopf (13) gesichert wird.

14. Verfahren nach einem der Ansprüche, 12 oder 13,
**dadurch gekennzeichnet,**
**dass** die Steuerstange (5) und das Befestigungsbauteil (11) vor dem Festlegen des Gelenkschalenbauteils (14) in einem gemeinsamen Lackierschritt lackiert werden.

## Claims

1. Wiper arm for a window wiper system, in particular for a motor vehicle, with a wiper rod (2) and a control rod (5) which is movable relative to the wiper rod (2) and is coupled to the wiper rod (2), wherein the control rod (5) can be fixed on a joint head (13), which is fixed on the bodywork, of a window wiper system by means of a joint socket (21), **characterized in that** the joint socket (21) is designed as a joint socket component (14) which is separate from a fastening component (11) fixed on the control rod (5) and can be fixed on the fastening component (11).

2. Wiper arm according to Claim 1, **characterized in that** the joint socket component (14) can be connected in an interlocking manner to the fastening component (11).

3. Wiper arm according to either of Claims 1 and 2, **characterized in that** the fastening component (11) engages behind the joint socket component (14) fixed on the fastening component (11).

4. Wiper arm according to one of the preceding claims, **characterized in that** the fastening component (11) is designed to secure the joint socket component (14) against being pulled off from the joint head (13), preferably **in that** the fastening component (11) closes an insertion opening (15) in the joint socket component (14), said insertion opening being designed for inserting the joint head (13) into the joint socket component (14), and/or **in that** the in particular rigid fastening component (11) prevents expansion of the joint socket component (14), which is preferably elastic at least in sections, for temporarily enlarging the insertion opening (15) in the joint socket component (14).

5. Wiper arm according to one of the preceding claims, **characterized in that**, for fixing on the fastening component (11), the joint socket component (14) can be inserted into a receptacle (12) of the fastening component (11), by said fastening component (11) preferably being pushed laterally onto the joint socket component (14).

6. Wiper arm according to one of the preceding claims, **characterized in that** the fastening component (11) is formed from metal, preferably from steel.

7. Wiper arm according to one of the preceding claims, **characterized in that** the fastening component (11) is fixed by crimping on the control rod (5) which is preferably formed from metal, in particular from steel.

8. Wiper arm according to one of the preceding claims, **characterized in that** the control rod (5) and the fastening component (11) are painted in a combined painting step, preferably by dipping into a cathodic paint dipping bath.

9. Wiper arm according to one of the preceding claims, **characterized in that** the joint socket (21) is designed as a ball socket and the joint head (13) as a ball head.

10. Window wiper system with, preferably exclusively, one wiper arm (1) according to one of the preceding claims.

11. Window wiper system according to Claim 10, **characterized in that** the joint head (13) of the window wiper system, which joint head is preferably arranged on a linkage holding device, and is fixed on the bodywork, is accommodated in the joint socket component (14) fixed on the fastening component (11).

12. Method for installing a window wiper system, according to either of Claims 10 and 11, **characterized by** the following steps:
• fixing a joint head (13), which is fixed on the bodywork, of the window wiper system on a joint socket component (14), and then
• fixing the joint socket component (14) on a fastening component (11) which has been fixed beforehand on a control rod (5), preferably by crimping.

13. Method according to Claim 12, **characterized in that** the joint socket component (14) is fixed on the fastening component (11) in such a manner that the joint socket component (14) is secured against being pulled off from the joint head (13).

14. Method according to either of Claims 12 and 13, **characterized in that** the control rod (5) and the fastening component (11) are painted in a combined painting step prior to the fixing of the joint socket component (14).

## Revendications

1. Bras d'essuie-glace pour une installation d'essuie-glace, en particulier pour un véhicule automobile, comprenant une tige d'essuie-glace (2) et une tige de commande (5) déplaçable par rapport à la tige d'essuie-glace (2), accouplée à la tige d'essuie-glace (2), la tige de commande (5) pouvant être fixée au moyen d'une coquille d'articulation (21) à une tête d'articulation (13) d'une installation d'essuie-glace, fixée à la carrosserie,
**caractérisé en ce que**
la coquille d'articulation (21) est réalisée sous forme d'un composant de coquille d'articulation (14) séparé d'un composant de fixation (11) fixé à la tige de commande (5), et pouvant être fixé sur le composant de fixation (11).

2. Bras d'essuie-glace selon la revendication 1,
**caractérisé en ce que**
le composant de coquille d'articulation (14) peut être connecté par engagement par correspondance de forme au composant de fixation (11).

3. Bras d'essuie-glace selon l'une quelconque des revendications 1 ou 2,
**caractérisé en ce que**
le composant de fixation (11) vient en prise par l'arrière avec le composant de coquille d'articulation (14) fixé au composant de fixation (11).

4. Bras d'essuie-glace selon l'une quelconque des revendications précédentes,
**caractérisé en ce que**
le composant de fixation (11) est réalisé de manière à fixer le composant de coquille d'articulation (14) pour l'empêcher de ressortir de la tête d'articulation (13), de préférence par le fait que le composant de fixation (11) ferme une ouverture d'introduction du composant de coquille d'articulation (14) réalisée pour introduire la tête d'articulation (13) dans le composant de coque d'articulation (14) et/ou par le fait que le composant de fixation (11), notamment rigide, empêche un élargissement du composant de coquille d'articulation (14), de préférence au moins partiellement élastique, pour augmenter temporairement l'ouverture d'introduction (15) du composant de coquille d'articulation (14).

5. Bras d'essuie-glace selon l'une quelconque des revendications précédentes,
**caractérisé en ce que**
le composant de coquille d'articulation (14) peut être introduit dans un logement (12) du composant de fixation (11), pour la fixation au composant de fixation (11), par coulissement de préférence latéral du composant de fixation (11) sur le composant de coquille d'articulation (14).

6. Bras d'essuie-glace selon l'une quelconque des revendications précédentes,
**caractérisé en ce que**
le composant de fixation (11) est réalisé en métal, en particulier de préférence en acier.

7. Bras d'essuie-glace selon l'une quelconque des revendications précédentes,
**caractérisé en ce que**
le composant de fixation (11) est fixé par sertissage à la tige de commande (5) réalisée de préférence en métal, en particulier en acier.

8. Bras d'essuie-glace selon l'une quelconque des revendications précédentes,
**caractérisé en ce que**
la tige de commande (5) et le composant de fixation (11) sont laqués dans une étape de laquage commune, de préférence par immersion dans un bain de laquage cathodique.

9. Bras d'essuie-glace selon l'une quelconque des revendications précédentes,
**caractérisé en ce que**
la coquille d'articulation (21) est réalisée sous forme de coque sphérique et la tête d'articulation (13) est réalisée sous forme de tête sphérique.

10. Installation d'essuie-glace, de préférence comprenant exclusivement un bras d'essuie-glace (1) selon l'une quelconque des revendications précédentes.

11. Installation d'essuie-glace selon la revendication 10,
**caractérisée en ce que**
la tête d'articulation (13) fixée à la carrosserie, de préférence disposée sur une fixation de tringlerie, de l'installation d'essuie-glace, est reçue dans le composant de coquille d'articulation (14) fixé au composant de fixation (11).

12. Procédé de montage d'une installation d'essuie-glace selon l'une quelconque des revendications 10 ou 11,
**caractérisé par** les étapes suivantes :
- fixation d'une tête d'articulation (13) fixée à la carrosserie de l'installation d'essuie-glace à un composant de coquille d'articulation (14) et
- fixation subséquente du composant de coquille d'articulation (14) à un composant de fixation (11) fixé préalablement à une tige de commande (5), de préférence par sertissage.

13. Procédé selon la revendication 12,
**caractérisé en ce que**
le composant de coquille d'articulation (14) est fixé au composant de fixation (11) de telle sorte que le composant de coquille d'articulation (14) soit fixé pour l'empêcher de ressortir de la tête d'articulation (13).

14. Procédé selon l'une quelconque des revendications 12 ou 13,
**caractérisé en ce que**
la tige de commande (5) et le composant de fixation (11) sont laqués avant la fixation du composant de coquille d'articulation (14) dans une étape de laquage commune.
